# DEMANDE DE BREVET EUROPEEN

(11) **EP 2 033 816 A2**
(43) Date de publication de la demande: **11.03.2009**
(21) Numéro de dépôt: 08370017.9
(22) Date de dépôt: 01.09.2008
(51) Int. Cl.: B60D 1/30, B60D 1/24

(54) **Dispositif de remorquage anti-lacet articulé**

(30) Priorité: 05.09.2007 FR 0706228
(71) Demandeur: Woestelandt, Emile, 59370 Mons-En-Baroeul (FR)
(72) Inventeur: Woestelandt, Emile, 59370 Mons-En-Baroeul (FR)

(57) **Abrégé**

Dispositif de remorquage articulé anti-lacet d'une remorque et d'un véhicule tracteur caractérisé par son positionnement sous l'arrière du véhicule tracteur et le fait qu'il comporte
1°- en remplacement de la rotule habituelle un crochet d'attelage oscillant latéralement et de forme cylindrique d'axe transversal afin d'empêcher tout pivotement latéral
2°- une flèche (1) centrale pivotant en avant sur le châssis du véhicule tracteur au voisinage de son essieu arrière et comportant un crochet d'attelage (18) et une flèche articulés bout à bout par un axe vertical pouvant être bloqué par un verrou (15) et collaborant avec un chariot (27) coulissant grâce à quatre galets (25) dans un tube carré transversal (22) prenant la place du même tube porteur habituellement du crochet d'attelage (18), lequel chariot (27) par un parcours tangentiel réalise le déverrouillage des éléments de la flèche ce qui a pour conséquence d'avoir soit une séquence anti-lacet intégrale soit celle habituellement pratiquée.

## Description

la présente invention concerne un dispositif de remorquage d'une remorque par un véhicule tracteur remarquable par sa capacité de supprimer la dérive en lacet de la remorque lorsqu'elle atteint une certaine vitesse et que les oscillations de la trajectoire atteignent une certaine importance Différents systèmes ont été proposés, mais n'ont pu s'imposer du fait de leur complexité, de leur coût et de leurs insuffisances . Le problème est complexe et implique de satisfaire aux trois impératifs suivants
1°- Eviter la propulsion latérale de la remorque dans le sens opposé au virage lors du redressement d'une oscillation . Ceci est parfaitement réalisé en faisant en sorte que l'ancrage de la remorque ne dépasse pas en arrière la ligne de l'essieu arrière du véhicule tracteur
2°- Eviter le débord de la remorque à l'intérieur d'un virage important susceptible de provoquer un accrochage latéral, débord qu'engendre fatalement l'impératif précédent dont il faut limiter les moyens à la seule angulation de virage pouvant provoquer une dérive en lacet c'est à dire de faible amplitude compte tenu de la vitesse accessible en l'occurrence
3)- Faire en sorte que le coût ne soit pas dissuasif.

La présente invention satisfait à ces trois directives

### Description

La description suivante est donnée à titre indicatif non exclusif ni limitatif. Le dispositif comporte un support (22) , une flèche (1), un col de cygne (2) ;et un inverseur (3)
1°- Un support (22), c'est un tube carré du type de profilé à froid employé couramment pour fixer la rotule d'attelage . Ce support présente à sa face inférieure une échancrure (23) sur toute sa longueur
2°- Une flèche (1) est située sous le véhicule tracteur selon son axe longitudinal, elle présente en avant un plateau (4) percé d'une lumière oblongue longitudinale (5) lequel plateau pivote sous un autre plateau (6) grâce à un axe vertical (7) qui au travers de la dite lumière (5) fixe l'ensemble au châssis du véhicule tracteur en un point (0) se projetant en arrière et au milieu de son essieu arrière. Le dit plateau (4) présente à son extrémité antérieure et de chaque côté un ergot (8) dirigé en haut et butant sur le bord antérieur du plateau (6) qu'il déborde . On comprend que lorsque la flèche (1) pivote les ergots (8) obligent l'axe (7) à occuper la partie arrière de la lumière (5). Afin de contre carrer ce déplacement, un ressort (12) est tendu en compression entre les plateaux (4 et 6) par l'intermédiaire d'un compas (9) chevauchant le plateau (4) par-dessous et dont le sommet (10) est solidaire du plateau (4) alors que les branches le sont du plateau (6) aux points (11). La flèche (1) présente en arrière un plateau (13) percée d'une lumière oblongue (14) afin de contenir un axe (28) Elle comporte un verrou (15) coulissant sur elle et retenu par un ressort (16) en compression à propulsion postérieure. La flèche (1) positionnée sous la soute de la roue de secours doit avoir la possibilité de se désolidariser au besoin du plateau (13) afin de libérer cette roue. Il peut s'agir d'un simple embrochement , d'usage et d'accès facile complété par une articulation transversale (19) placée au voisinage de l'extrémité antérieure de la flèche (1)
3°- Un col de cygne (2) qui comporte en arrière une partie coudée vers le haut et terminée par un crochet d'attelage (18) qui est un élément cylindrique transversal en remplacement de la rotule habituelle, le dit col de cygne se prolonge par un plateau (17) à bord circulaire (20) porteur en avant d'un coussinet (21) d'axe vertical et en arrière d'une échancrure (29) dans laquelle s'enclave le verrou (15)
4°- Un inverseur (3) Celui-ci comporte un chariot (27) et deux ressorts (26) opérant à l'intérieur du dit support (22). Le dit chariot (27) est une plaque transversale placée de chant et débordant en bas dans l'échancrure (23), elle supporte perpendiculairement à chaque extrémité un axe (24) porteur de part et d'autre d'un galet (25). Le dit chariot (27) est solidement solidaire d'un axe (28) fixé verticalement à son bord inférieur et en son milieu donc hors du support (22), ceci afin de réduire l'encombrement.

L'axe (28) est destiné à pivoter dans le coussinet (21) du plateau (17) du dit col de cygne et à coulisser dans la lumière oblongue (14) du plateau (13) de la flèche (1). Les dits ressorts (26) sont à action mixte de compression et de traction, ils sont solidaires du chariot (27) et du support (22) .Ils collaborent avec un amortisseur et peuvent être remplacés par un ressort à gaz

### Fonctionnement

A la lecture de la description et au vu des dessins ,il apparaît que se constituent deux phases du virage selon que le verrou (15) occupe ou non l'échancrure (29) et donc en rapport avec l'amplitude du virage .Lorsque la flèche (1) s'incline latéralement, elle entraîne le chariot (27) et le déverrouillage du verrou (15) et de l'échancrure (29). La rigidité de la flèche (1) et du col de cygne (2) étant rompue le chariot (27) est propulsé vers le centre et avec lui le col de cygne (2). Ce moyen élimine tout risque d'accrochage dans l'accomplissement du virage dès lors que le verrou (15) soit maintenu hors de l'échancrure (29) en coulissant sur le bord circulaire (20) du plateau (17). Le redressement du virage s'exécute par le coulissement inverse du verrou (15) et sa réintégration dans l'échancrure (29) sous l'action du ressort (16)

### Générique

1 -flèche
2 -col de cygne
3 -inverseur
4 -plateau antérieur de la flèche 1
5 -lumière oblongue du plateau antérieur de la flèche 1
6 -plateau collaborant avec le châssis du véhicule tracteur(sous le plateau 4)
7 -axe vertical fixant le plateau 6 au châssis du véhicule tracteur
8 -ergot fixé sur le plateau 6
9 -compas
10 -sommet du compas
11-point de fixation des branches du compas sur le plateau 6
12-ressort du compas
13-plateau arrière de la flèche 1
14-lumière oblongue du plateau 13
15-verrou
16-ressort du verrou
17-plateau circulaire prolongeant le col de cygne (en arrière)
18-crochet d'attelage
19-articulation transversale de la flèche
20-bord circulaire du plateau 17
21-coussinet du plateau 17 du col de cygne
22-support
23-échancrure inférieure du support
24-axe porteur de galet
25-galet
26-ressort
27-chariot
28-axe vertical du chariot
29-échancrure antérieure du plateau 17 du col de cygne

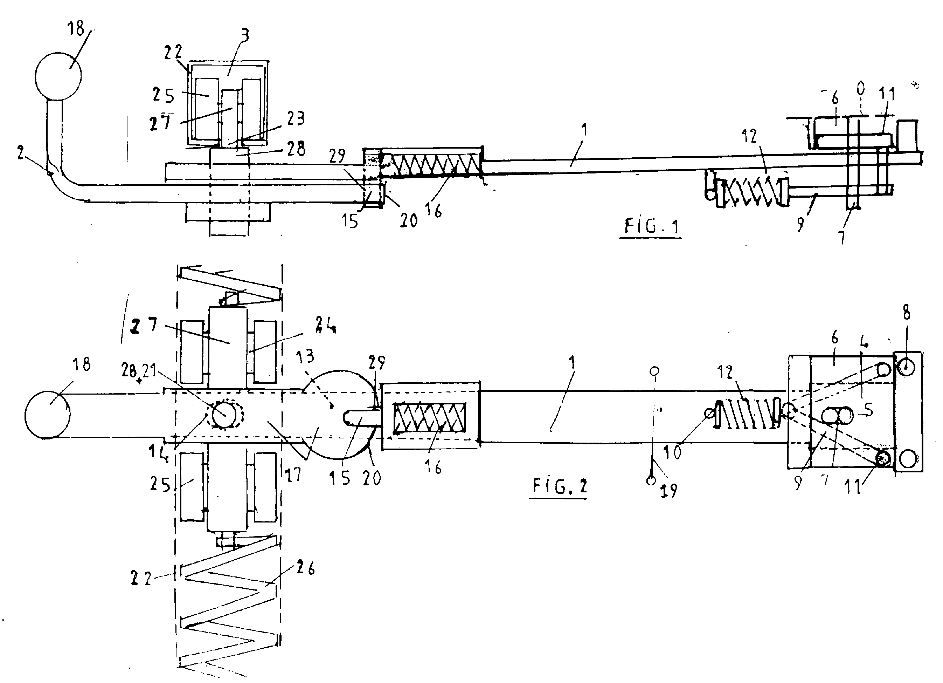

## Revendications

1. Dispositif de remorquage articulé antilacet d'une remorque par un véhicule tracteur sous lequel il est fixé **caractérisé en ce qu'**il possède comme moyens pouvant éliminer la dérive en lacet et empêcher l'accrochage de la remorque lors d'un virage important :un support (22), une flèche (1), un col de cygne (2) et un inverseur (3).

2. Dispositif de remorquage selon la revendication « 1 » **caractérisé en ce qu'**il comporte un support (22), qui est un tube carré du type de profilé à froid employé habituellement pour supporter la rotule d'attelage, et dont la face inférieure présente une échancrure (23) sur toute sa longueur

3. Dispositif de remorquage selon la revendication « 1 » **caractérisé en ce qu'**il comporte une flèche (1) située sous le véhicule tracteur selon son axe longitudinal, se terminant en avant par un plateau (4) percé d'une lumière oblongue longitudinale (5), plateau pivotant d'une part sous un autre plateau (6) et qui est solidarisé au châssis du véhicule tracteur, grâce à un axe vertical (7) qui à travers la dite lumière (5) fixe l'ensemble au châssis du véhicule tracteur en un point (0) se projetant en arrière et au milieu de l'essieu arrière et d'autre part présentant à son extrémité antérieure et de chaque côté un ergot (8) dirigé en haut et butant sur le bord antérieur du plateau (6) qu'il déborde.

4. Dispositif de remorquage selon la revendication « 3 » **caractérisé en ce que** , afin de permettre une translation de la flèche en avant lorsqu'elle pivote et sa remise à sa place initiale consécutive, elle comporte un ressort compressif (12) tendu entre les dits plateaux (4 et 6) grâce à un compas (9) enjambant le plateau (6) par-dessous et dont les branches s'appuient en avant aux extrémités antérieures et latérales (11) du plateau (6) et dont le sommet (10) s'appuie sur la flèche (1) par l'intermédiaire du ressort (12)

5. Dispositif de remorquage selon la revendication « 3 » **caractérisée en ce que** la flèche (1) se termine en arrière par un plateau (13) qui présente une lumière oblongue longitudinale (14) et comporte un verrou (15) coulissant sur la dite flèche (1) et retenu par un ressort en compression (16) et à propulsion postérieure

6. Dispositif de remorquage selon la revendication « 1 » **caractérisée en ce qu'**il comporte un col de cygne (2) terminé en arrière par une partie coudée vers le haut et coiffée par un crochet d'attelage (18) qui est un élément cylindrique d'axe transversal remplaçant la rotule usuelle afin de supprimer toute rotation latérale et se prolonge en avant par un plateau (17), comportant un coussinet (21) d'axe vertical , et dont la partie antérieure se termine par un bord circulaire (20) comportant une échancrure (29) ouverte en avant et destinée à enclaver le verrou (15) de la flèche (1)

7. Dispositif de remorquage selon la revendication « 1 » **caractérisé en ce qu'**il comporte un inverseur (3) comprenant un chariot (27) constitué d'une part par une plaque transversale positionnée de chant à l'intérieur du support (22) et flanqué de chaque côté et à chaque extrémité par quatre galets (25) grâce à deux axes (24) qui la traversent et coulissant d'autre part dans échancrure (23) aménagée dans la face inférieure du support (22) et d'autre part un axe vertical (28) inséré au milieu du bord inférieur du chariot (23) et destiné à pivoter dans le coussinet (21) du plateau (19) du col de cygne (2), il est également destiné à occuper la lumière oblongue (14) du plateau (13) de la flèche (1)

8. Dispositif de remorquage selon les revendications «2 et 7 » **caractérisé en ce qu'**il comporte deux ressorts (26) agissant en compression et en extension à l'intérieur du support (22) et collaborant simultanément avec le chariot (27) et le support (22) de manière à ce que , lors du déverrouillage de la flèche (1) et du col de cygne (2), ils propulsent ceux-ci vers le centre, évitant ainsi tout accrochage de la remorque

9. Dispositif de remorquage selon la revendication « 8 » **caractérisé en ce que** les ressorts (26) collaborent avec un amortisseur et peuvent être remplacés par un ressort à gaz .
